# EUROPEAN PATENT APPLICATION

(11) **EP 4 052 967 A1**
(43) Date of publication of application: **07.09.2022**
(21) Application number: 21159861.0
(22) Date of filing: 01.03.2021
(51) Int. Cl.: B60R 9/058

(54) **SUPPORT FOOT FOR ROOF RAIL**

(71) Applicant: Mont Blanc Industri AB, 516 90 Dalsjöfors (SE)
(72) Inventor: Kristoffersson, Fredrik, 513 32 Fristad (SE); Folkesson, Johan, 523 40 Ulricehamn (SE)
(74) Representative: AWA Sweden AB

(57) **Abstract**

The present invention relates to a roof rail support foot adapted to be mounted on a roof rail of a vehicle, said roof rail support foot comprising mounting means for mounting the support foot onto said roof rail in a first state; wherein said support foot is configured to move from said first state to a second state when subjected to an accelerating force above a threshold value; and wherein said support foot comprises at least one engagement portion adapted to engage a roof rail when said support foot is in a second state such that said support foot is decelerated.

## Description

### Field of the invention

The present invention relates to a support foot for mounting rails on vehicle roofs, more specifically a support foot having at least one edge adapted to cut said mounting rail in order to decelerate said support foot when subjected to high impact forces.

### Background

Products intended for use on the exterior of a vehicle, such as roof rails, load bars and gear fastened thereon, are often subjected to strict requirements regarding safety. During situations of high retardation, such as collisions with other vehicles or sudden braking, it is in most countries imposed a harsh ruleset on how much, in terms of weight, of the exterior gear that can be separated from the vehicle. Exterior gear, therefore, has to be properly fastened to the vehicle. Posing such demands does not only put a lot of responsibility on the end user, but on the producer of such a product. Gear adapted to the exterior of a vehicle has to have the strength to carry the weight of the luggage fastened thereon and withstanding high forces, but also has to be constructed in a way as to allow for the absorption of high schock impulse due to high retardation.

For support feet that are adapted to be mounted on roof rails, the issue of withstanding high shock impulses is of substantial importance. Such support feet often serve to secure load bars or further platforms intended to, in turn, suspend hevy equipment such as bicycles or roof boxes. During high retardation, heavy objects suspended to the vehicle by the support feet are accelerated in a direction reacting to the impulse, straining the feet and in the worst case, causing them to break whereupon said heavy objects are flung off the vehicle and risk causing harm.

There are some solutions in the state of the art that aims at adressing the issue of shock absorption in support feet. It is common practice, e.g., to provide a rubber coating on roof rail on which the support foot is mounted. The rubber coating provides a surface of low friction, allowing the foot to slide along the rail during impact and by sliding, decelerate due to friction. The problem with this solution is that while it may work for small impulses, the small amount of friction has proven insufficient for absorbing high shocks. In order to remedy this, one solution that has been provided is having layers of rubber on either the roof rail or the attachement part of the support foot. These layers are then adapted to consume the energy of the impact. While this may successfully absorb said energy, this solution results in the deformation of the support foot, placing the end user in the position where they have to acquire a new one. Furthermore, an uncontrolled deformation of a support foot poses the risk of material being dispensed to the surroundings of the vehicle, thereby violating safety requirements.

### Summary

An object of the present invention is therefore to alleviate at least some of the abovementioned problems with the current state of the art.

According to a first aspect of the present invention, a roof rail support foot adapted to be mounted on a roof rail of a vehicle is provided, the roof rail support foot comprising mounting means for mounting the support foot onto the roof rail in a first state, wherein the support foot is configured to move from the first state to a second state when subjected to an accelerating force above a threshold value, and wherein the support foot comprises at least one engagement portion adapted to engage a roof rail when said support foot is in a second state such that said support foot is decelerated.

The first state is a normal operating state of the support foot. A normal operating state is to be understood as a state in which the support foot is mounted on a roof rail and supports a load bar, cargo or similar. A normal operating state is thus a state when the support foot has not been or is not subjected to an accelerating force above threshold value.

The accelerating force subjecting the support foot may originate from the vehicle on which the foot is mounted suddenly braking, crashing, or retarding due to any other circumstance. The accelerating force may also originate due to the vehicle being hit by, e.g., another vehicle.

The threshold value above which the support foot is brought from the first state to the second state may e.g. be a force large enough to accelerate the support foot in a direction along the roof rail on which it is mounted.

In at least one exemplary embodiment, the support foot in the second state is pivoted relative the first state. The second state is pivoted relative said first state, which means that the support foot is adapted to be pivoted from said first state to said second state. That the foot is pivoted in said second state in relation to said first state is to be understood as the foot having a different angular position in relation to the roof rail or the vehicle from to the angular position when in said first state. The support foot may be pivoted in a plane containing a longitudinal extension of the roof rail on which the foot is mounted, when in said second state. The support foot may also be pivoted in a plane substantially vertical in relation to the roof rail when in said second state. The support foot may also be pivoted in a plane substantially horizontal in relation to the roof rail when in said second state. Thus, in at least one exemplary embodiment, the threshold value is defined by a torque needed to bring said support foot from said first state to said second state. The accelerating force on the support foot originating from e.g. the vehicle suddenly decelerating will apply a torque on the support foot. If the torque applied on the foot is large enough to pivot it, it will pivot from a first position to a second position.

The support foot may comprise more than one engagement portion. In at least one exemplary embodiment, the support foot comprises a first engagement portion and a second engagement portion adapted to engage a roof rail when the support foot is in the second state. The first engagement portion may comprise a first engagement edge and the second engagement portion may comprise a second engagement edge. By having two engagement portions, more points of contact between the support foot and the roof rail, when the support foot is in the second state, are provided. Thus, a higher resistance to translational motion is exhibited, and the support foot can be decelerated more quickly, i.e. decelerated in a shorter amount of time or after a shorter distance of translation along the roof rail. Engagement of the engagement portion with the roof rail when the support foot is in said second, pivoted state, may be physical contact between the portion and the roof rail such that the engagement portion is sliding along the roof rail, and/or such that the engagement edge of the engagement portion is cutting, shearing, planing or performing any other work on the roof rail. Due to this physical contact, the support foot can be frictionally decelerated if it is translated across the surface of the roof rail. The point of contact between the support foot and the roof rail may be a singular point of contact.

According to an exemplary embodiment, the at least one engagement portion is at least partially coated by at least one sacrificial layer.

The sacrificial layer is arranged to be consumed when subjected to a frictional force above at least a frictional threshold value so as to expose said at least one engagement portion. A sacrificial layer is to be understood as comprised by a material that is coated on the engagement portion and adapted to be consumed, peeled off, scraped off or the like when the engagement portion engages or is engaged with the roof rail. It is therefore the friction created by the engagement of the engagement portion with the roof rail that consumes the sacrificial layer. The sacrificial layer is adapted to protect the roof rail, or other parts of the support foot or the gear it is used in conjunction with, from the engagement portion when it is unwanted that said edge engages with or cuts the roof rail. The sacrificial layer is therefore adapted to reduce the cutting properties of the engagement portion, e.g. by being made of a softer material than the engagement edge. The sacrificial layer is preferably made of any of the following materials, or a combination thereof: polymeric materials, such as polyester, rubber materials or similar materials having a lower hardness than the engagement portion.

The sacrificial layer may at least partially coat the engagement edge of the engagement portion.

The sacrificial layer is preferably chosen from a type of material that has material properties such that a lower friction is established between the coated engagement portion and the roof rail as compared to an exposed engagement portion and the roof rail. By having a low friction between a coated engagement portion and the roof rail, the coated edge may glide across the roof rail. The friction originating from the gliding of the coated engagement portion across the roof rail consumes, peels off or scrapes of the sacrificial coating, thereby exposing the portion, whereafter the edge of the portion can cut into the roof rail, decelerating the support foot.

According to an exemplary embodiment, the at least one engagement portion comprises an engagement edge adapted to engage a roof rail when said support foot is in said second state.

An engagement edge may e.g. be a sharp in transition such that it is adapted to further cut into the roof rail, thereby increasing the rate at which the support foot is decelerated.

In at least one exemplary embodiment, the at least one engagement portion is at least partially coated by a second sacrificial layer.

By coating the engagement portion with more than one sacrificial layer, further adaptation of the frictional properties of the engagement portion is possible. For example, by coating the portion with a first material that is consumed after the portion has been translated along the roof rail a short distance, a second coating is exposed. The second coating may exert an increased friction, thereby decelerate the support foot to the extent that it stops, without the need for the engagement edge to be exposed. This may for example be advantageous in situations where the support foot is pivoted by some other means than an accelerating force originating from a retardation of the vehicle on which the foot is mounted. If the support foot is pivoted and the engagement portion is engaged with the roof rail due to human or animal intervention, having multiple layers may hinder the roof rail from getting damaged by the engagement portion.

The first and second sacrificial layer may be arranged in layers, i.e. that the engagement portion has a first coating of the first sacrificial layer and a second coating, at least partially covering the first coating, of the second sacrificial layer. The first and the second sacrificial layers may also not overlap at all, i.e. coating different parts of the engagement portion.

According to an exemplary embodiment, the at least one engagement portion is made of a metal or a metal alloy, such as steel.

Other materials that the engagement edge may be made from include ceramic materials, very hard polymeric materials, crystalline materials or any other material that is hard enough to engage with a roof rail and decelerate the support foot through friction, shearing or other forces.

According to an exemplary embodiment, the first engagement portion is at least partially coated with a first sacrificial layer and the second engagement portion is at least partially coated with a second sacrificial layer.

The first friction threshold may be the same as the second frictional threshold. The first friction threshold may be different from the second frictional threshold. By having the frictional threshold values being different from each other, the edges will be exposed when subjected to different magnitudes of frictional force.

According to an exemplary embodiment, the mounting means comprises at least one clamping portion arranged to mount the support foot to a roof rail, wherein the at least one clamping portion comprises the at least one engagement portion.

By having the engagement portion on the clamping portion, the engagement portion may be situated close to the roof rail.

According to an exemplary embodiment, the mounting means comprises an inner clamping portion and an outer clamping portion, and wherein said inner clamping portion comprises said first engagement portion and wherein said outer clamping portion comprises said second engagement portion.

The clamping portions may be in contact with different sides of the roof rail, i.e. be clamping the roof rail in different directions.

According to a second aspect of the present invention, a method for decelerating a support foot is provided, the method comprising: providing the support foot; mounting the support foot on a roof rail of a vehicle in a first state; subjecting the support foot to an accelerating force above at least one threshold value, thereby bringing it from the first state to the second state and thereby engaging the at least one engagement portion with the roof rail; and engaging the roof rail with the at least one engagement edge such that the support foot is decelerated.

By engaging the roof rail, the engagement portion may be in physical contact between with the roof rail, sliding along the roof rail, or cutting, shearing, planing or performing any other work on the roof rail. It is due to the engagement of the portion with the roof rail, and the forces arising between them, that decelerates the support foot. The support foot is mounted in a first, normal operating state. In this first, normal operating state, the support foot is adapted to carry the weight of the load bar, roof box or any other gear mounted thereon. When subjected to a force above a certain threshold value, the foot is brought from the first, normal operating state to the second state, wherein engagement is established between the at least one engagement portion with the roof rail, thereby decelerating the foot and consequently, the load carried thereon. This makes any other security means or decelerating means redundant, since this functionality is built into the support foot.

In at least one exemplary embodiment, the step of subjecting the support foot further comprises pivoting the support foot such that, when in the second state, the support foot is pivoted relative the first state.

According to an exemplary embodiment, a method is provided, wherein said support foot comprises a first engagement portion adapted to engage said roof rail in a first direction and a second engagement portion adapted to engage said roof rail in a second direction.

The first direction may be the same as the second direction. The first direction may be substantially opposite to the second direction, e.g. if the first engagement portion engages the top side of the roof rail and the second engagement portion engages the bottom side of the roof rail. The first direction may be at least non-parallel, but preferably substantially perpendicular, to the second direction.

According to an exemplary embodiment, a method is provided, wherein said support foot is adapted to pivot in a first plane coinciding with said first direction when subjected to an accelerating force above a first threshold value and in a second plane coinciding with said second direction when subjected to an accelerating force above a second threshold value.

The support foot is adapted to be pivoted in two planes. The planes may be the same plane. The planes may be at least not parallel, but preferably perpendicular, to each other. By having the support foot being able to pivot in two planes, two engagement portions can be made to engage with the roof rail, thereby creating two points of contact, further increasing the deceleration of the support foot after it has been subjected to an accelerating force exceeding both thresholds.

According to a third aspect of the present invention, a load bar adapted to be mounted the roof of a vehicle comprising a support foot according to the first aspect of the present invention is provided.

### Brief description of the drawings

The invention, some non-limiting embodiments, and further advantages of the invention will now be described with references to the drawings, in which:
Fig. 1 is an exploded perspective view of a support foot according to the invention, a roof bar adapted to be attached to the support foot and a roof rail on which the support foot is adapted to be mounted.
Fig. 2 is an exploded perspective view of the a subset of the parts of the support foot in Fig. 1 displaying the engagement portion and the sacrificial layer.
Fig. 3A is a side view of the support foot when arranged on a roof rail.
Fig. 3B is a perspective view of the support foot in Fig. 3A.
Fig. 4 is a perspective bottom view of the support foot according to the invention when mounted on a roof rail.
Fig. 5A is a top view of a support foot according to the invention when attached to a roof bar and mounted on a roof rail.
Fig. 5B is a bottom view of the support foot in Fig. 4A detailing the engagement portion and the sacrificial layer.
Fig. 6A is a top view of the support foot in Fig. 5A when the support foot is subjected to an external force, e.g. due to rapid deceleration of the vehicle on which the support foot is arranged.
Fig. 6B is a bottom view of the support foot in Fig. 6A.
Fig. 7A is a top view of the support foot in Fig. 5A when the support foot is subjected to an external force, e.g. due to rapid deceleration of the vehicle on which the support foot is arranged, and wherein the force is larger than that in Fig. 6A,B.
Fig. 7B is a bottom view of the support foot in Fig. 7A.
Fig. 8A is a side view of the support foot when the support foot is subjected to an external force, e.g. due to rapid deceleration of the vehicle on which the support foot is arranged.
Fig. 8B is a cut out side view of the support foot in Fig. 8A.

### Detailed description

In the following detailed description, some embodiments of the present invention will be described. However, it is to be understood that features of the different embodiments are exchangeable between the embodiments and may be combined in different ways, unless anything is specifically indicated. Even though in the following description, numerous details are set forth to provide a more thorough understanding of the present invention, it will be apparent to one skilled in the art that the present invention may be practiced without these details. In other instances, well known constructions or functions are not described in detail, so as not to obscure the present invention.

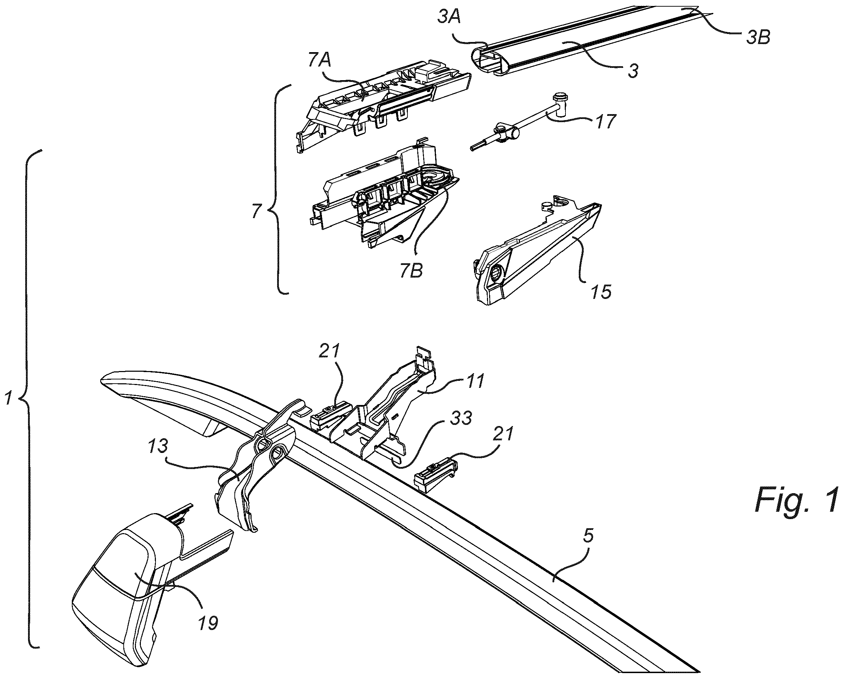

Fig. 1 shows an exploded view a support foot 1 according to the invention. The support foot 1 is adapted to be attached to the load bar 3 and mounted on the roof rail 5. The load bar 3 is adapted to be attached to the support foot 1 at a first distal end 3A, and further to another support foot 1 at a second distal end 3B. Here, a second support foot 1 is not shown. The roof rail 5 has an extension along the longitudinal extension of the vehicle (not shown). As such, the load bar 3 is arranged substantially perpendicular to the extension of the roof rail 5 and to the longitudinal extension of the vehicle.

The support foot 1 comprises a body 7, here comprising a first and a second part 7A, 7B. The first and a second parts 7A, 7B of the body 7 are e.g. made of a plastic material. For example, the first and a second parts 7A, 7B may be produced by injection moulding. The foot 1 further comprises mounting means 9 for mounting the support foot 1 onto the roof rail 5. Mounting means can be any device that fasten the support foot 1 to the roof rail 5, such as a clamp, a screw, a plug, a protrusion adapted to be latched in a cut in the roof rail etc. The mounting means, or any device that the mounting means is attached to, when the support foot is mounted on the roof rail, is for the purpose of the present invention adapted to be slideable across the roof rail 5. The mounting means 9 here comprises an inner clamping portion 11 and an outer clamping portion 13. The inner clamping portion 11 and the outer clamping portion 13 are preferably made of a metal material, such as steel. The foot 1 further comprises a lever arm 15 arranged to be operated in a horizontal plane. The lever arm 15 is adapted, when the foot 1 is assembled, to be connected to an operating pin 17 such that, when the lever arm 15 is operated, the operating pin 17 opens or closes the mounting means 9. The mounting means 9 may also be operated in alternative ways, such as by a screwing mechanism or by manually close the mounting means 9 around the roof rail 5 and subsequently lock it in such a position.

A cap 19 is adapted to cover the body 7 and at least the outer clamping portion 13 of the foot 1. A first and a second distancing block 21, 23 is adapted to be arranged on the roof rail 5 adjacent to the inner clamping portion 11 in order to distance the inner clamping portion 11 in the longitudinal direction of the roof rail 5 from any other object arranged along the rail 5. The distancing blocks 21, 23 is here shown as mirror images of each other. However, they may be alternatively be identical. Alternatively, they may be of differing size such that one distancing block 21, 23 is has a length that is larger than the other distancing block 21, 23 in the direction along the roof rail 5.

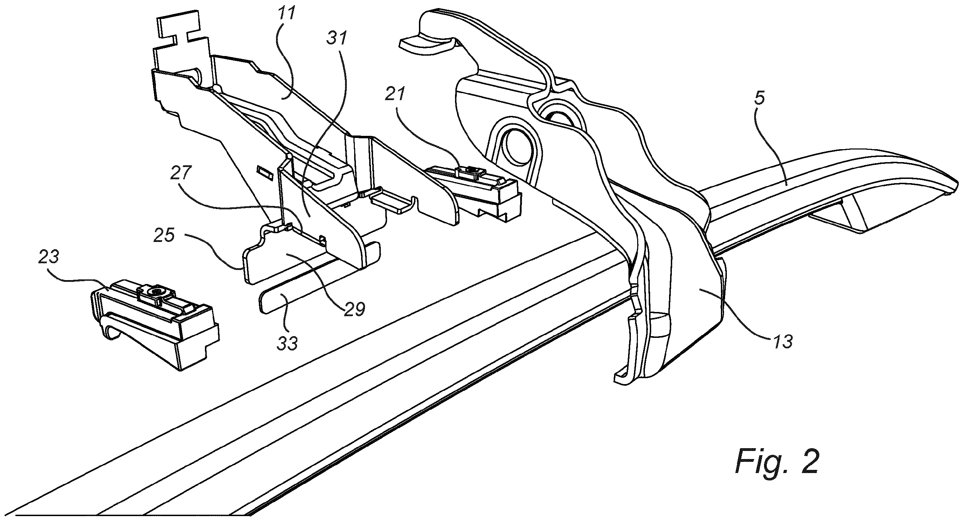

In Fig. 2, the inner clamping portion 11 and the outer clamping portion 13 are shown in a close-up view. The inner clamping portion 11 comprises a first engagement edge 25 and a second engagement edge 27 adapted to engage the roof rail 5. Alternatively, one or both of the first and second engagement edge 25, 27 may be arranged on the outer clamping portion 13. Alternatively, a third engagement edge 25, 27 may be arranged on the outer clamping portion 13. Here, the first engagement edge 25 is formed on a first engagement portion 29 of the inner clamping portion 11, whereas the second engagement edge 27 is formed on a second engagement portion 31.

A sacrificial layer 33 is adapted to be arranged on the first engagement portion 29 such that the first engagement portion 29 is not in direct physical contact with the roof rail 5 when the foot 1 is arranged on the roof rail 5. Thus, the roof rail 5 is protected from being damaged by the engagement portion 29 e.g. when the foot 1 is being mounted on the roof rail 5. The sacrificial layer is preferably made of any of the following materials, or a combination thereof: polymeric materials, such as polyester, rubber materials or similar materials having a lower hardness than the engagement portion 29.

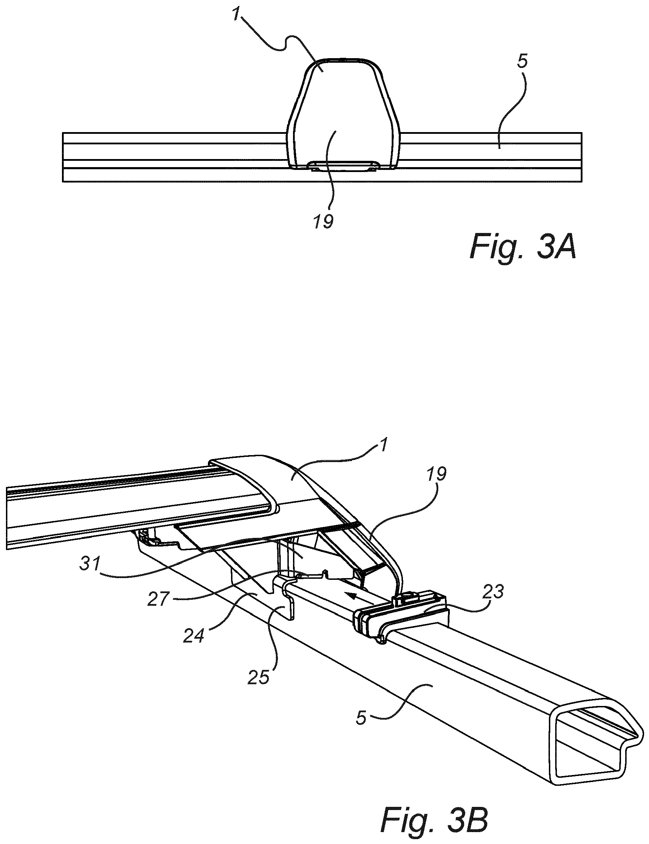

In Fig. 3A, the support foot 1 is shown from a side view wherein the load bar 3 extends into the drawing. The relative position of the support foot 1 to the roof rail 5 is a first state of the support foot 1. In Fig. 3B, the support foot 1 is shown from a perspective view when arranged on the roof rail 5. The arrow indicates how the distancing block 23 is to be arranged against the support foot 1.

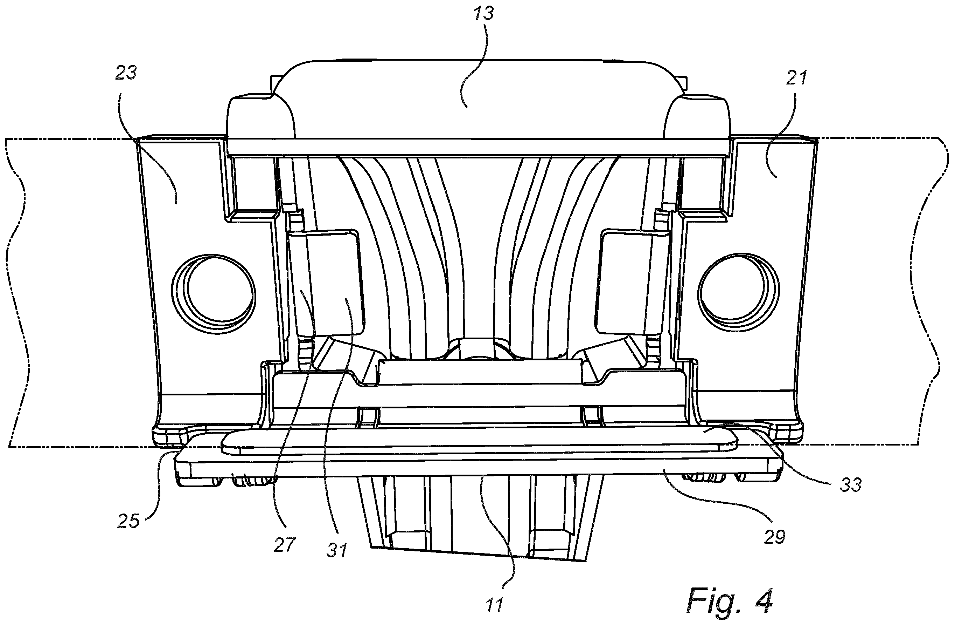

Fig. 4 is a bottom view of the support foot 1 when arranged on the roof rail 5. Here, the roof rail 5 is transparent for the purpose of displaying the foot 1. The sacrificial layer 33 is arranged against the roof rail 5 such that the first engagement portion 29 is not in direct physical contact with the roof rail 5.

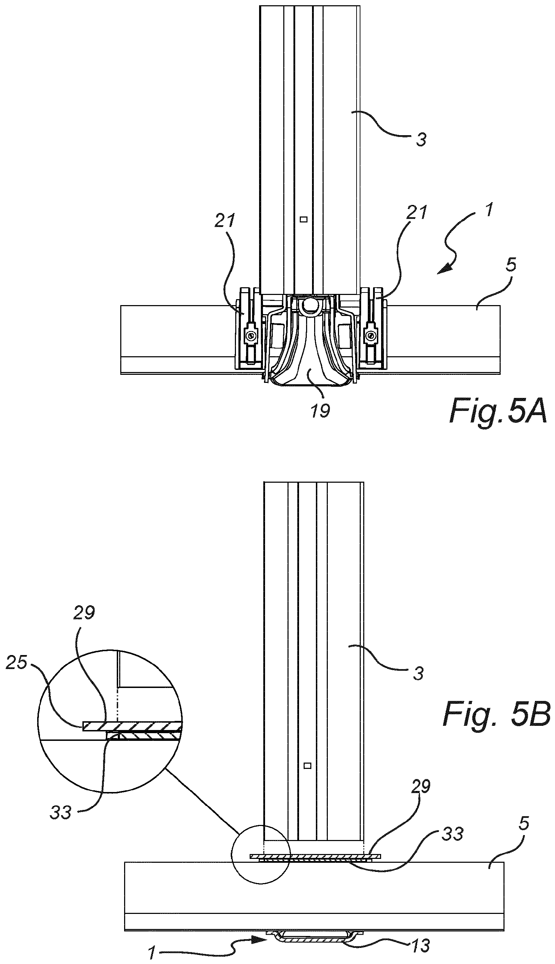

Fig. 5A is a top view of the support foot 1 when arranged on the roof rail 5. Here, the support foot 1 is in a first state in which it is substantially stationary with respect to the roof rail 5. Fig. 5B is a bottom view of the support foot 1, highlighting the first engagement portion 29 and the sacrificial layer 33 separating the engagement portion 29 from the roof rail 5. The first state may be understood as a normal operating state in which state the support foot is when, for example, a vehicle on which the support foot 1 is mounted is travelling at a constant speed, or substantially constant speed, or where any acceleration or deceleration is subjecting the support foot 1 to a force lower than the threshold value over which the support foot 1 is in a second state.

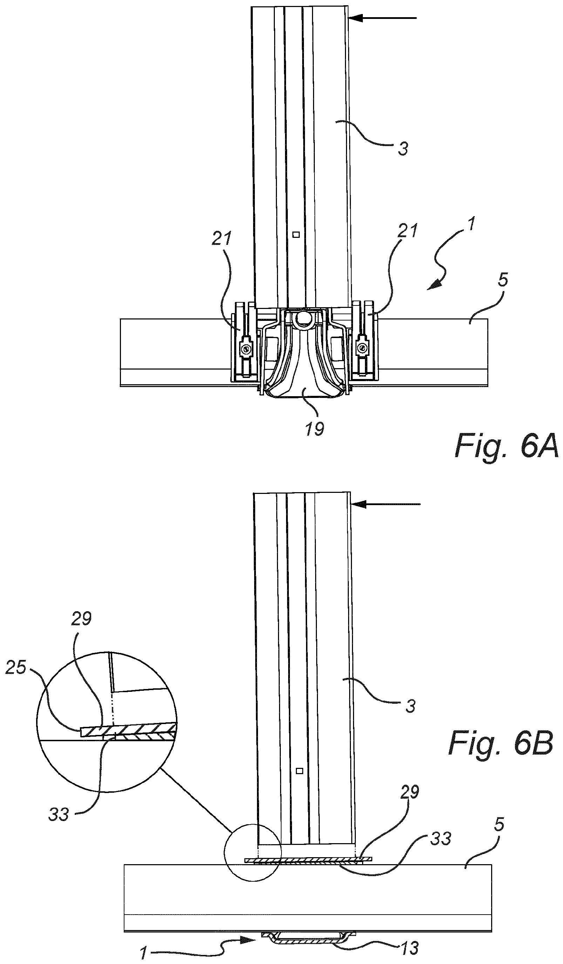

Fig. 6A and fig. 6B also shows the support foot 1 in a first state. Here, the support foot 1 is subjected to a small force F1. The force F1 is acting on the support foot 1 by acting on the load bar 3. The force F1 e.g. originates from the acceleration of a load (not shown) suspended on the load bar 3. The force F1 moreover applies a torque to the support foot 1 such that it pivots in the plane of the drawing, i.e. in a plane parallel to the load bar 3. The force F1 thus acts on support foot such that the engagement edge 25 of the first engagement portion 29 is at a position closer to the roof rail 5 than in the position in Fig. 5A, B. However, the sacrificial layer 33 still separates the engagement portion 29 and the engagement edge 25 and the roof rail 5.

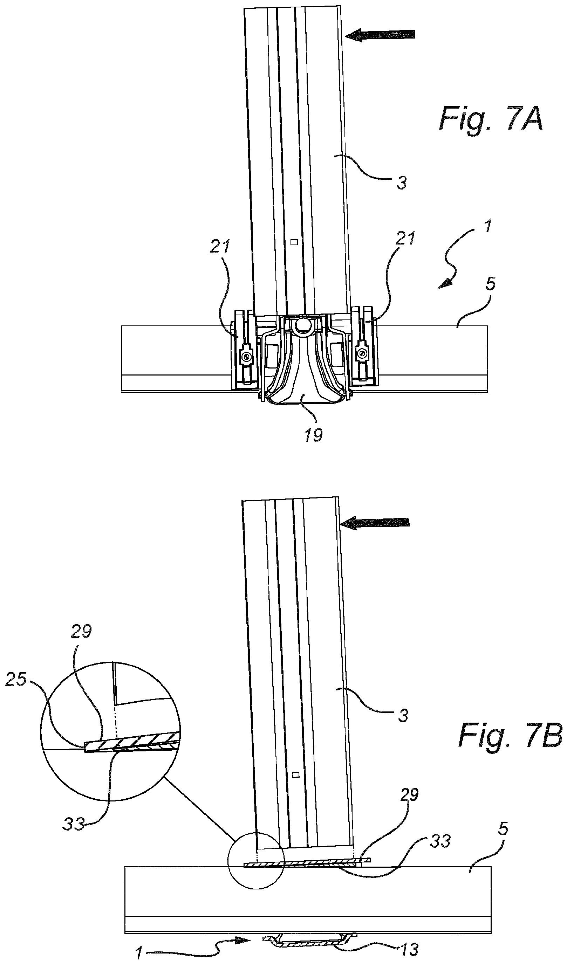

In fig 7A and 7B, the support foot 1 is in a second state in which the engagement portion 29 engages with the roof rail 5. Here, a force F2 acts on the load bar 3 and the support foot 1. The force F2 is larger than the force F1 in Fig. 5A,B. The force F2 accelerates the support foot along the roof rail 5 such that a frictional force between the sacrificial layer 33 and the roof rail 5 at least partially consumes the sacrificial layer 33 such that the engagement portion 29 comes in direct physical contact and engages with the roof rail 5. Furthermore, the force F2 applies a torque to the support foot 1 such that it pivots the support foot 1 in a plane parallel with a longitudinal extension of the roof rail 5. The pivoting of the foot 1 has reduced the distance between the engagement portion 29 and the roof rail 5 such that the engagement edge 25 of the engagement portion 29 is arranged in direct physical contact. Thus, the engagement edge 25 of the first engagement portion 29 engages with the roof rail 5 such that the support foot 1 is in the second state either by the sacrificial layer 29 being at least partially consumed by friction when the foot 1 moves along the roof rail 5, or by the foot 1 pivoting, or by a combination of the two.

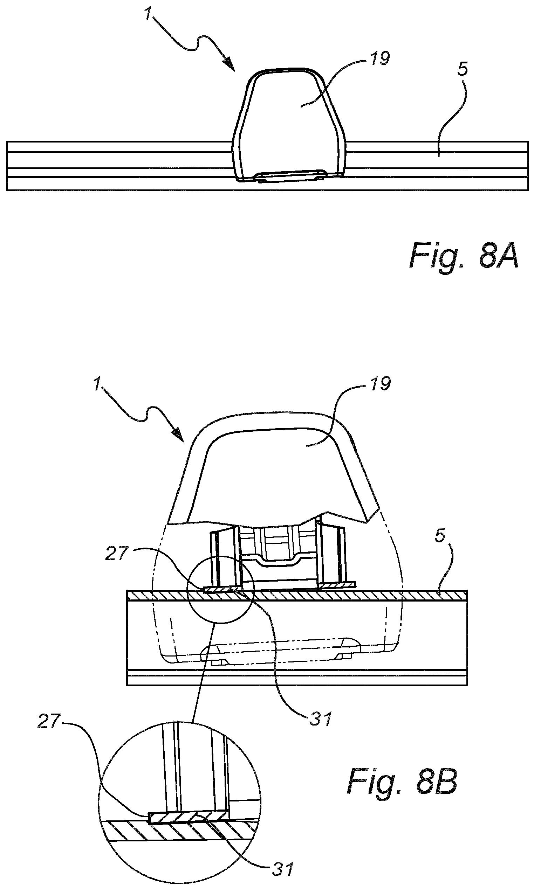

Fig. 8A shows the support foot 1 that has been pivoted in a plane perpendicular to the extension of the load bar 3 and along the roof rail 5. The support foot 1 may be pivoted in such a plane due to torque exerted by a force acting on the support foot 1 through the load bar 3 when e.g. the vehicle is decelerating. In Fig. 8B the inside of the support foot detailing the second engagement portion 31 comprising a second engagement edge 27. The second engagement portion 31 is at least partially covered by a sacrificial layer 35 having similar function as the sacrificial layer 33 at least partially covering the first engagement portion 29. Here, the second engagement portion 31 is arranged at a distance to the roof rail 5 when the support foot 1 is arranged in the first state. Here, the sacrificial layer 35 at least partially covering the second engagement portion 31 is also arranged at a distance from the roof rail 5 when the support foot 1 is arranged in the first state. Alternatively, the sacrificial layer 35 may be arranged in direct physical contact with the roof rail 5 when the support foot 1 is arranged in the first state. By arranging the sacrificial layer 35 and the engagement portion 31 at a distance from the roof rail 5, pivoting of the support foot 1 arranges the sacrificial layer 35 in direct physical contact with the roof rail 5. As such, when the support foot 1 is pivoted and accelerated along the roof rail 5, the sacrificial layer 35 will be at least partially consumed such that at least the engagement edge 27 of the engagement portion 31 engages with the roof rail 5 such that the support foot 1 is decelerated.

## Claims

1. A roof rail support foot adapted to be mounted on a roof rail of a vehicle, said roof rail support foot comprising mounting means for mounting the support foot onto said roof rail in a first state;
wherein said support foot is configured to move from said first state to a second state when subjected to an accelerating force above a threshold value; and
wherein said support foot comprises at least one engagement portion adapted to engage a roof rail when said support foot is in a second state such that said support foot is decelerated.

2. The roof rail support foot according to claim 1, wherein said support foot in said second state is pivoted relative said first state.

3. The support foot according to claim 1 or 2, wherein said at least one engagement portion is at least partially coated by at least one sacrificial layer.

4. The support foot according to any preceding claim, wherein said at least one engagement portion comprises an engagement edge.

5. A support foot according to any preceding claim, wherein said at least one engagement portion is made of a metal or a metal alloy, such as steel.

6. A support foot according to any preceding claim comprising a first engagement portion and a second engagement portion adapted to engage a roof rail when said support foot is in said second state.

7. A support foot according to claim 6, wherein said first engagement portion is at least partially coated with a first sacrificial layer and said second engagement portion is at least partially coated with a second sacrificial layer.

8. A support foot according to any preceding claim wherein said mounting means comprises at least one clamping portion arranged to mount said support foot to a roof rail, wherein said at least one clamping portion comprises said at least one engagement portion.

9. A support foot according to claim 7 and 8, wherein said mounting means comprises an inner clamping portion and an outer clamping portion, and wherein said inner clamping portion comprises a first engagement edge and wherein said outer clamping portion comprises a second engagement edge.

10. A support foot according to any of the claims any preceding claim, wherein said threshold value is defined by a torque needed to bring said support foot from said first state to said second state.

11. A method for decelerating a support foot according to any one of claims 1-10, said method comprising:
providing said support foot;
mounting said support foot on a roof rail of a vehicle in a first state;
subjecting said support foot to an accelerating force above at least one threshold value, thereby bringing it from said first state to said second state and thereby engaging said at least one engagement portion with said roof rail; and
engaging said roof rail with said at least one engagement portion such that the support foot is decelerated.

12. The method according to claim 11, wherein the step of subjecting said support foot further comprises pivoting said support foot such that, when in said second state, said support foot is pivoted relative said first state.

13. A method according to claim 12, wherein said support foot comprises a first engagement portion adapted to engage said roof rail in a first direction and a second engagement portion adapted to engage said roof rail in a second direction.

14. A method according to claim 13, wherein said support foot is adapted to pivot in a first plane coinciding with said first direction when subjected to an accelerating force above a first threshold value and in a second plane coinciding with said second direction when subjected to an accelerating force above a second threshold value.

15. A load bar adapted to be mounted the roof of a vehicle comprising a support foot according to claim 1.
